# EUROPEAN PATENT APPLICATION

(11) **EP 3 666 074 A1**
(43) Date of publication of application: **17.06.2020**
(21) Application number: 18212826.4
(22) Date of filing: 16.12.2018
(51) Int. Cl.: A01N 63/02

(54) **ADJUVANT COMPOSITION, METHOD OF PRODUCING THE ADJUVANT COMPOSI-TION AND USES THEREOF**

(71) Applicant: Sandoz GmbH, 6250 Kundl/Tirol (AT)
(72) Inventor: Ammann, Michael, 6250 Kundl/Tirol (AT)
(74) Representative: Baumann, Rüdiger Walter

(57) **Abstract**

The invention concerns an adjuvant composition consisting of or comprising at least one permeate obtained from waste water derived from fungal borne production of at least one pharmaceutically active or additive ingredient using at least one microorganism, in particular a fungal species, a method of producing the adjuvant composition, the use of the adjuvant in agriculture, a plant growth media, the use of the plant growth media and a growth substrate consisting of or comprising the adjuvant composition.

## Description

The present invention relates to an adjuvant composition, a method of producing the adjuvant composition and uses thereof in agriculture.

New important soil-based fungal diseases require urgent attention and products that assist in fighting diseases such as Panama disease in bananas and Ganoderma wilt disease in palm oil and coconut. These diseases cause significant damage in banana cultivation and palm oil trees. Currently there is no prospective of conventional and even organic pesticides to stop the continuing spread of diseases. Furthermore a growing tendency towards organic food and high quality products exists, this need being met by an increasing proportion of organic agriculture. As a consequence leading manufacturers of plant protection agents are trying to offer ecologically compatible products such as clean and residue-free plant protection agents that are rapidly degradable. The efforts not only focus to plant breeding but also extend to livestock health.

It was found that by-products from Penicillin production contain highly efficient inducers of resistance. The activity is linked to Penicillium strains and can be actively used against several key diseases in important crop and livestock diseases. Furthermore use of these by-products can significantly contribute to an optimized use of resources in Penicillin production.

It is well known in the art to use Penicillium mycelium or mycelium suspension as an additive in growth media to protect plants against key pathogens such as downy meldew and oidium in grapevine, apple scab in apples and late blight in tomatoes. However the use of mycelia has considerable drawbacks such as economic production and use.

Accordingly, it is an object of the present invention to provide an adjuvant composition suitable for enhancing plant and animal growth and inducing resistance of agricultural crops and livestock against diseases.

The invention provides for an adjuvant composition consists of or comprises at least one permeate obtained from waste water derived from the fungal borne production of pharmaceutically active ingredients such as antibiotics or citric acid. Antibiotics and other fungal borne active pharmaceutical ingredients are produced using at least one fungal species such as i. a. *P. chrysogenum.* Without restricting the invention to this strain, the adjuvant composition may consists of or comprise permeates obtained from a variety of fungal strains and is not restricted to antibiotics production. The present composition has the advantage that only waste water otherwise discarded is used and surprisingly exhibits the invention beneficial effects on plants. There is no need to extract mycelium and provide a mycelium suspension as in state of the art products. Putatively the composition contains elicitors triggering and enhancing plant immunoreaction against crop pests, such as fungi.

The adjuvant composition of the present invention consists of or comprises a permeate comprising a mixture of at least one glycoprotein and at least one further protein or protein species.

Surprisingly the best results were obtained with the mixture comprising the at least one glycoprotein and the at least one further protein or protein species having molecular weights each ranging between 5.0 kD and 8.0 kD, preferable 6.5 kD.

In a preferred embodiment the adjuvant composition is obtained from permeates obtained from waste water derived from fermentative production of active or additive ingredients in the pharmaceutical field using fungal species selected from the group consisting of *Penicillium, Acremonium, Tolypocladium, Septoria, Beauveria, Sesquicilliopsis* , *Claviceps, Phoma, Fusarium, Gibberella, Clitopilus, Saccaromyces, Pichia,* and *Aspergillus* species or mixtures thereof, preferably of *Penicillium* species, in particular *Penicillium chrysogenum.* The invention thus provides for a use of waste water otherwise discarded.

In the adjuvant composition best results with respect to enhancing plant and animal growth and inducing resistance against diseases are obtained with a protein concentration in the composition of between 0,02 and 0,50 g/l of permeate, preferably between 0,09 g/l and 0,21g/l of permeate

Surprisingly the beneficial effect of the invention adjuvant composition could be obtained if the composition is provided in either of liquid, gaseous or solid, preferably water-soluble state.

To yield the invention effect of the adjuvant composition plants, parts of plants, seeds, and/or their locus of growth and/or livestock, livestock feed or buildings used for livestock breeding is/are contacted with an effective amount of an adjuvant composition thus resulting in an enhanced growth and/or induced resistance against pests, such as fungal and/or bacterial organisms harmful to plants or animals.

The invention also covers a method of producing the adjuvant composition described above. The method comprises the steps of:
(i) preparing a nutrient solution,
(ii) adding a suspension containing fungal spores, in particular spores obtained from cultures of fungal species selected from the group consisting of *Penicillium, Acremonium, Tolypocladium, Septoria, Beauveria, Sesquicilliopsis* , *Claviceps, Phoma, Fusarium, Gibberella, Clitopilus, Saccaromyces, Pichia, and Aspergillus* species or mixtures thereof, preferably of *Penicillium* species, in particular *Penicillium chrysogenum* to the nutrient solution,
(iii) growing the fungal species in the suspension to form a mycelium,
(iv) fermenting the suspension to obtain a pharmaceutically active or additive main product, in particular antibiotic, citric acid or other fermented product,
(v) separating the main product from the suspension,
(vi) separating the mycelium from the suspension, preferably by decanting the suspension,
(vii) providing the mycelium-free suspension for use as an adjuvant.

Optionally steps (ia) transferring the nutrient solution into a fermentation vessel and parallel or prior to transferal and (ib) sterilizing the nutrient solution can be applied.

To obtain a sterile permeate additional step:
(viii) sterilizing the suspension obtained from step (vii) by antibacterial treatment, preferably chemical treatment, heat treatment and/or sterile filtration
can be applied to meet quality criteria of downstream users of the permeat/adjuvant composition.

For optimized bioavailability and storage stability the step of:
(ix) adjusting the suspension pH to 4.0
is applied to the suspension.

To facilitate storage and logistics, the suspension is optionally concentrated e.g. by means of condensing and water evaporation or dried, e.g. freeze-dried preferably by applying the step of
(x) concentrating or drying to the suspension.

Before, during or after concentrating the suspension an optional step of:
(xi) adjusting the suspension protein content to between 0,02 and 0,50 g/l, preferably to between 0,09 g/l and 0,21 g/l
is applied in order to obtain a standardized suspension and adjuvant composition for downstream use in plant or animal cultivation.

To foster the beneficial effects of the invention suspension, one preferred embodiment of the invention method comprises the step of
(xii) mixing the suspension with at least one agrochemical, in particular wherein the agrochemical is selected from a pesticide, a growth regulator and a fertilizer.

This optional step is in particular used in plant cultivation and surprisingly yields an enhancement of the efficiency and bioavailability of the agrochemical. The latter allows for a reduced amount of agrochemical being required to obtain comparable or even better results in agrochemical measures of plant protection and treatment

The invention use of the adjuvant as described above and/or obtained from a method as described above in agriculture contemplates use of the adjuvant being present in liquid, gaseous or solid, preferably water-soluble state. The use thus covers direct contacting plants, parts of plants, seeds, their locus of growth or a plant growth media with the adjuvant composition e.g. by spraying, irrigation, fumigation and/or immersion. In an exemplary embodiment of the use the plants, parts of plants, seeds are sprayed or fumigated with the adjuvant composition or a medium containing and effective amount of the adjuvant composition following an initial immersion or irrigation with the in the adjuvant composition or a medium containing and effective amount of the adjuvant composition. As an alternative or addition, a growth medium such as soil or an *in vitro* growth medium can be provided by or be supplemented with the adjuvant composition or a medium containing and effective amount of the adjuvant composition.

It could be demonstrated, that the invention use enhances plant growth, in particular root and shoot growth of agricultural crops. Plants treated with the adjuvant composition pursuant to the present invention surprisingly exhibit enhanced shoot growth as well as enhanced shoot and root weights. By means of non-restricting example, in tomato seedlings shoot weight increased by up to 325%, root-weight by up to 163% and shoot growth by up to 102%, compared to untreated plants.

Furthermore it was found that the use of the adjuvant composition pursuant to the present invention surprisingly elicits resistance of agricultural crops against diseases. Such diseases are in particular fungal diseases, preferably infections with *Fusarium ssp.* in particular F. *oxisporum, Pythium ssp.* in particular *P. ultimum, Plasmopara ssp.* in particular *P. viticiola, Uncinula ssp.* in particular *U. necator, Venturia ssp.* in particular *V. inaequalis, Peronospora ssp.* in particular *P. destructor, Ganoderma boninese* and/or *Phytophtera ssp.* in particular *Phytophtera infestans.* By means of non-restricting example soil treated with the invention adjuvant composition prior to sowing yields healthier cress or tomato plants when infected with *Pythium ultimum* or *Fusarium oxisporum,* respectively.

The invention use enhances plant growth and/or elicits resistance by contacting the plants, parts of plants, seeds, their locus of growth or a plant growth media with an effective amount of the adjuvant composition as described earlier.

The invention use surprisingly enhances the bio-efficacy or bio-availability of at least one agrochemical. The invention use also comprises applying a mixture of the adjuvant and the agrochemical to plants, parts of plants, seeds, or at their locus of growth in any desired sequence, including simultaneously, separately, or in succession with at least one other agrochemically active substances, in an amount effective to enhance the bio-efficacy or bio-availability of said at least one agrochemical and/or the at least one other agrochemically active substances. As an effect, the amounts of agrochemicals can be significantly reduced. Preferably the agrochemical is selected from a pesticide, a growth regulator and/or a fertilizer or mixtures thereof.

A further aspect of the present invention is to provide for a plant growth media comprising an effective amount of the adjuvant composition as described earlier. The invention plant growth media is preferably provided in liquid or solid state. In a preferred embodiment the plant growth media described herein further comprises additives, fillers, pH adjusting agents and/or liquids, in particular water. It is further envisaged by the invention that the plant growth media further comprises a gelling agent. The invention plant growth media may thus be used as an additive or adjuvant in in vitro cultivation of plants by substituting or supplementing in vitro plant growth media.

It is an objective of the present invention to further provide for a plant growth media containing an effective amount of an agrochemical. The adjuvant composition added in the plant growth media or providing the plant growth media supports enhancing the bio-efficacy or bio-availability of the at least one agrochemical.

Depending on the intended utilization the plant growth media is present preferably in solid, liquid or gaseous state.

The invention contemplates a use of the plant growth media as described before for enhancing plant growth, in particular root and shoot growth of agricultural crops and/or for eliciting resistance of agricultural crops against diseases by applying the plant growth media to plants, parts of plants, seeds, or at their locus of growth or by growing the plants in a media consisting of or comprising the plant growth media.

The invention also contemplates growth substrate such as soil, clay-, perlite- and/or vermiculite-based substrate, or preferably water-based substrate used in particular in in-vitro-culture of plants. The substrate consists of or comprises the adjuvant composition or a plant growth media as described herein.

The invention also contemplates the use of the adjuvant composition as an additive in livestock breeding. The invention contemplates the use of the adjuvant composition in particular in liquid, gaseous or solid, preferably water-soluble state. The adjuvant compositions of the present invention exhibit a measurable impact on enhancing livestock health and/or eliciting resistance against livestock diseases. The use comprises contacting the livestock or a livestock feedstuff with an effective amount of the adjuvant composition as described herein. Surprisingly it was found that the use of the invention adjuvant composition can elicit resistance of livestock against diseases, in particular inflammatory diseases. Furthermore the use of the invention adjuvant composition supports better and faster healing of in particular inflammatory diseases. The use preferably supports prevention and treatment of bovine uterus infections.

### Examples

The pathogen *Fusarium oxysporum f.sp. lycopersici* (Fol), the causal agent of Fusarium wilt, causes significant damage to tomato yields worldwide. During the penicillin production substances, with presumably inhibitory effects on the growth of fungi, are formed. In this experiment the wastewater of the penicillin production (invention adjuvant composition) has been tested on tomatoes. In the experiment tomato plants were treated with different amounts of adjuvant composition and half of the tomatoes were additionally infected with Fol. The results show, that tomato plants, treated with the adjuvant composition, did not get infected with Fol, except two plants. It was also shown that the adjuvant composition dose plays a big role on its ability to protect the plant from Fol. A small increase in the Fol-concentration in the second execution, led to a higher infection rate of the plants, treated with the lower adjuvant composition-dose. Additionally, adjuvant composition-treated plants grew significantly faster than non-treated plants. The adjuvant composition-treated plants also had heavier shoot dry matter and root dry matter. In conclusion it was shown, that adjuvant composition had a positive effect on the vitality and the growth of tomato plants.

### Example 1: Growth test of tomato plants on soils incubated with the adjuvant composition of the present invention

The adjuvant composition pursuant to the present invention was obtained in a standard procedure of producing the permeate comprising comprises the steps of (i) preparing a nutrient solution, (ia) transferring the nutrient solution into a fermentation vessel, (ib) sterilizing the nutrient solution, (ii) adding a suspension containing fungal spores obtained from cultures of *Penicillium chrysogenum* to the nutrient solution, (iii) growing the fungal species in the suspension to form a mycelium, (iv) fermenting the suspension to obtain an antibiotic product, (v) separating the antibiotic product from the suspension, (vi) separating the mycelium from the suspension, by decanting the suspension, (vii) providing the mycelium-free suspension. Thereafter permeate was sterilized by standard means of sterilization.

In two independent experimental setups (cf. below tables V1 & V2) tomato plants were grown on a substrate incubated with various amounts of the invention adjuvant composition V1 PEM1, V1 PEM2, V2PEM1 and V2PEM2. Control batches V1UK and V2UK were grown on untreated soil.

Plants were grown under identical growths conditions and harvested 6 weeks after sowing. Shoots and roots were separated from each other and dried. Shoot lengths and dry weights of plant seedlings as well as shoot weight and root weight were determined.

### Adjuvant composition

The adjuvant composition was obtained free of Penicillin residues and contained a total of 0,09 g of proteins. Nutrient content of the adjuvant composition was 79 g Nitrogen / kg dry matter, 22,5 g phosphor / kg dry matter and 23,5 g potassium / kg dry matter. Content of dry matter in the solution was 50 g of dry matter / l adjuvant solution. One liter of adjuvant composition thus contains 0,4 % (m/m) nitrogen, 0,1 % (m/m) phosphor and 0,1 % (m/m) potassium.

### Plant material

### Sterilization of seeds

Tomato variety Krems pearl (Solanum lycopersicum L., Austroselect, Vienna,Austria) was used. In the first step, the seeds were sterilized in order to kill microorganisms. This was done by swiveling in a solution for ten minutes. 25 ml of water, 25 ml of "Dan Klorix" and a drop of "Tween". Then the seeds were washed three times for a total of nine minutes in a water bath. They were sown into a pot filled with perlite.

### Growth conditions

The germination took place in a climatic chamber (Planton, Kiel, Germany) at a day- and night-change of 14 hours light and 10 hours dark. The temperature was raised to 24 °C. After three weeks, the plants were large enough (BBCH stage 12-13) to be piqued. The substrate for the pots was a mixture of equal parts of sand, potting soil and Leca. This mixture was autoclaved twice before use.

### Test variants

The following variants were examined. The test series were each carried out twice.
'V1UK': Untreated control
'V1PEM1': concentration 15 ml of adjuvant composition
'V2PEM2': concentration 30 ml of adjuvant composition

The pots of the PEM1 variant 'V1PEM1' were each mixed with 15 ml of adjuvant composition This corresponds to 5 % of the volume of the substrate in the pots. The PEM2 variants 'V2PEM2 were each mixed with 30 ml of adjuvant composition and this corresponds to 10 % of the volume of the substrate. The variant without of adjuvant composition 'UK' was treated with 30 ml water. Tomato seedlings were taken from the perlite, placed in the pots and the substrate was lightly pressed.

### Harvesting of plants

After six weeks in the greenhouse, the plants were harvested and evaluated. Any soil remains were removed from the roots by washing with water, and the following parameters: Total weight, shoot length and root length were determined. The infestation intensity with Fol was determined with the Wellmann scale (Wellmann, 1939). Subsequently the shoot and root parts were dried in a drying cabinet at 105 °C for two days and then the dry matter measured

**Table 1: Experimental Set up V1 - Untreated control samples (V1 UK)**

| **V1 UK** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 1,85 | 49 | 0,74 | 0,07 | 232 | 1,08 | 0,03 |
| | 1,44 | 39 | 0,75 | 0,05 | 201 | 0,65 | 0,02 |
| | 1,11 | 42 | 0,71 | 0,07 | 115 | 0,4 | 0,12 |
| | 1,43 | 46 | 0,87 | 0,11 | 240 | 0,5 | |
| | 1,28 | 41 | 0,68 | 0,06 | 170 | 0,6 | 0,04 |
| | 1,65 | 43 | 0,82 | 0,13 | 166 | 0,82 | 0,06 |
| | 1,63 | 48 | 0,86 | 0,23 | 165 | 0,78 | 0,12 |
| | 0,89 | 33 | 0,39 | | 230 | 0,49 | |
| **Average** | 1,41 | 43 | 0,73 | 0,09 | 190 | 0,67 | 0,05 |

**Table 2: Experimental setup V1 - Samples treated with 15 ml of Permeate (V1 PEM1)**

| **V1 PEM1** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 5,79 | 75 | 3,09 | 0,53 | 312 | 2,14 | 0,21 |
| | 4,02 | 61 | 2,35 | | 177 | 1,57 | |
| | 3,07 | 63 | 1,88 | 0,61 | 139 | 1,11 | 0,21 |
| | 3,29 | 62 | 1,91 | | 145 | 1,3 | |
| | 4,37 | 70 | 2,72 | 0,48 | 160 | 1,56 | 0,16 |
| | 3,31 | 67 | 1,8 | | 200 | 1,47 | |
| | 2,8 | 55 | 1,7 | 0,44 | 211 | 1,07 | 0,16 |
| | 2,89 | 61 | 1,86 | | 197 | 1,01 | |
| **Average** | 3,69 | 64 | 2,16 | 0,26 | 193 | 1,40 | 0,09 |

**Table 3: Experimental setup V1 - Samples treated with 30 ml of Permeate (V1 PEM1)**

| **V1 PEM2** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 5,53 | 85 | 3,23 | 1,02 | 210 | 2,25 | 0,27 |
| | 5,9 | 77 | 3,51 | | 255 | 2,32 | |
| | 6,67 | 78 | 3,94 | 0,82 | 141 | 2,65 | 0,32 |
| | 5,42 | 83 | 3,37 | | 107 | 2 | |
| | 5,46 | 81 | 3,02 | 0,86 | 220 | 2,38 | 0,32 |
| | 4,04 | 61 | 2,1 | | 254 | 1,86 | |
| | 6,88 | 92 | 4,21 | 0,68 | 171 | 2,62 | 0,31 |
| | 4,73 | 79 | 3,23 | | 265 | 1,45 | |
| **Average** | 5,58 | 80 | 3,33 | 0,42 | 203 | 2,19 | 0,15 |

**Table 4: Experimental Set up V2 - Untreated control samples (V2 UK)**

| **V2 UK** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 3,01 | 65 | 1,6 | 0,25 | 220 | 1,35 | 0,06 |
| | 2,42 | 64 | 1,29 | 0,12 | 238 | 1,12 | 0,09 |
| | 2,58 | 55 | 1,28 | 0,18 | 231 | 1,28 | 0,08 |
| | 2,13 | 54 | 1,17 | 0,14 | 226 | 0,9 | 0,06 |
| | 2,36 | 47 | 1,19 | 0,13 | 217 | 1,13 | 0,06 |
| | 2,43 | 49 | 1,31 | 0,1 | 183 | 1,09 | 0,09 |
| | 2,72 | 74 | 1,48 | 0,12 | 150 | 1,22 | 0,08 |
| | 1,26 | 46 | 0,69 | 0,07 | 354 | 0,54 | 0,05 |
| **Average** | 2,36 | 57 | 1,25 | 0,14 | 227 | 1,08 | 0,07 |

**Table 5: Experimental Set up V2 - Samples treated with 15 ml of Permeate (V2 PEM1)**

| **V2 PEM1** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 5,08 | 71 | 2,78 | 0,31 | 271 | 2,26 | 0,1 |
| | 5,94 | 97 | 3,75 | 0,26 | 160 | 2,12 | 0,11 |
| | 5,32 | 91 | 3,02 | 0,21 | 181 | 2,28 | 0,12 |
| | 5,56 | 92 | 2,97 | 0,4 | 340 | 2,55 | 0,15 |
| | 3,79 | 63 | 2,07 | 0,34 | 226 | 1,7 | 0,14 |
| | 3,9 | 68 | 2,1 | 0,22 | 209 | 1,79 | 0,17 |
| | 4,46 | 72 | 2,45 | 0,42 | 224 | 2 | 0,14 |
| | 4,84 | 80 | 2,83 | 0,47 | 171 | 1,99 | 0,12 |
| Average | 4,86 | 79 | 2,75 | 0,33 | 223 | 2,09 | 0,13 |

**Table 6: Experimental Set up V2 - Samples treated with 30 ml of Permeate (V2 PEM2)**

| **V2 PEM2** | | | | | | | |
|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** |
| | 7,88 | 103 | 4,86 | 0,63 | 192 | 2,97 | 0,19 |
| | 7,45 | 106 | 4,48 | 0,73 | 343 | 2,9 | 0,17 |
| | 5,59 | 84 | 3,34 | 0,55 | 276 | 2,21 | 0,15 |
| | 5,99 | 89 | 3,6 | 0,37 | 139 | 2,37 | 0,13 |
| | 6,08 | 99 | 3,82 | 0,44 | 150 | 2,22 | 0,14 |
| | 5,78 | 83 | 3,64 | 0,54 | 475 | 2,11 | 0,14 |
| | 6,78 | 88 | 4,36 | 0,4 | 271 | 2,38 | 0,15 |
| | 6,07 | 85 | 4,12 | 0,61 | 246 | 1,91 | 0,18 |
| Average | 6,45 | 92,13 | 4,03 | 0,53 | 262 | 2,38 | 0,16 |

As a result, treatment of soil with the adjuvant composition pursuant to the invention resulted in an average increase in shoot length, shoot weight (dried) and root weight (dried) in the samples treated with the double amount of adjuvant solution compared to untreated samples. Significant increases in dried root weight (+163%), in dried shoot weight (+325%) and shoot growth (+102%) in treated vs. untreated samples exhibit a strong correlation and impact of treatment on plant growth.

### Example 2: Impact of Fusarium oxisporum infection of tomato plants on soils incubated with the adjuvant composition of the present invention

The adjuvant composition pursuant to the present invention was obtained in a standard procedure described in Example 2. Tomato seedlings were infected with *Fusarium oxisporum.* Impact of infection on root and shoot weight, shoot growth and infection intensity was monitored using standard methods.

In two independent experimental setups (cf. below tables V1 Fol & V2 Fol) tomato plants were grown on a substrate incubated with various amounts of the invention adjuvant composition V1 PEM1+Fol, V1 PEM2+Fol, V2PEM1+Fol and V2PEM2+Fol. Control batches V1 Fol and V2 Fol were grown on untreated soil.

Plants were grown under identical growths conditions and harvested 6 weeks after sowing. Shoots and roots were separated from each other and dried. Shoot lengths and dry weights of plant seedlings as well as shoot weight and root weight were determined. Infection intensity was monitored using standard methods.

### Adjuvant composition

The adjuvant composition was obtained free of Penicillin residues and contained a total of 0,09 g of proteins. Nutrient content of the adjuvant composition was 79 g Nitrogen / kg dry matter, 22,5 g phosphor / kg dry matter and 23,5 g potassium / kg dry matter. Content of dry matter in the solution was 50 g of dry matter / l adjuvant solution. One liter of adjuvant composition thus contains 0,4 % (m/m) nitrogen, 0,1 % (m/m) phosphor and 0,1 % (m/m) potassium.

### Plant material

### Sterilization of seeds

Tomato varity Krems pearl (Solanum lycopersicum L., Austroselect, Vienna,Austria) was used. In the first step, the seeds were sterilized in order to kill microorganisms. This was done by swiveling in a solution for ten minutes. 25 ml of water, 25 ml of "Dan Klorix" and a drop of "Tween". Then the seeds were washed three times for a total of nine minutes in a water bath. They were sown into a pot filled with perlite.

### Growth conditions

The germination took place in a climatic chamber (Planton, Kiel, Germany) at a day- and night-change of 14 hours light and 10 hours dark. The temperature was raised to 24 °C. After three weeks, the plants were large enough (BBCH stage 12-13) to be piqued. The substrate for the pots was a mixture of equal parts of sand, potting soil and Leca. This mixture was autoclaved twice before use.

### Test variants

The following variants were examined. The test series were each carried out twice.
'V1Fol': Fusarium oxysporum f.sp. lycopersici - control
'V1PEM1Fol': concentration 15 ml of adjuvant composition + Fol
'V1PEM2Fol': concentration 30 ml of adjuvant composition + Fol
'V2PEM1Fol': concentration 15 ml of adjuvant composition + Fol
'V2PEM2Fol': concentration 30 ml of adjuvant composition + Fol

The pots of the PEM1 variants 'PEM1Fol' were each mixed with 15 ml PEM.

This corresponds to 5 % of the volume of the substrate in the pots. The PEM2 variants 'PEM2Fol' were each mixed with 30 ml PEM and this corresponds to 10 % of the volume. of the substrate. The variants without PEM, 'Fol', were treated with 30 ml water each.

### Inoculation with Fusarium oxisporum

Before the actual inoculation, the number of chlamydospores in the solution was determined. In the first test series (V2PEM1Fol), 2,49ml of Fusarium oxisporum inoculate were filled into the pots and thus 1.13*106 Chlamydospores present, in the second test series (V2PEM2Fol) 2.94 ml of Fusarium oxisporum inoculate were filled into the pots 1,18*106 Chlamydospores per pot present.

### Harvesting of plants

After six weeks in the greenhouse, the plants were harvested and evaluated. Any soil remains were removed from the roots by washing with water, and the following parameters: Total weight, shoot length and root length were determined. The infestation intensity with Fol was determined with the Wellmann scale (Wellmann, 1939). Subsequently the shoot and root parts were dried in a drying cabinet at 105 °C for two days and then the dry matter measured.

### Statistical evaluation

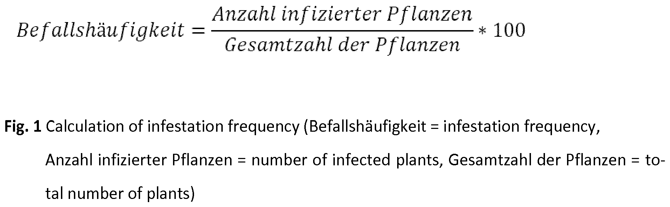

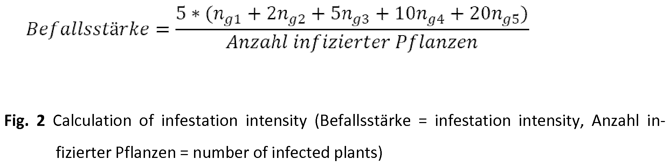

For the variance analytical evaluation and the subsequent Tukey Test as well as the the Minitab 18 program was used to calculate the standard deviation. Results are significant when the p-value is less than 0.05. The infestation frequency was calculated using the following formula of Fig. 1. The infestation intensity was calculated with the formula of Fig. 2, wherein ng1 is the number of all infected plants with an infestation intensity of 0.5-1 after Wellmann's scale. This results in ng2 for all plants with the infestation intensity 2, for ng3 all plants with infestation intensity 3-4, for ng4 all plants with infestation intensity 5-6 and for ng5 all plants with infestation levels ≥ 7.

**Table 7: Experimental Set up V1 - Untreated soil control samples; infected with Fusarium oxisporum (V1Fol)**

| **V1 Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 2,1 | 54 | 1,11 | 0,4 | 145 | 0,95 | 0,17 | X | |
| | 1,45 | 33 | 0,63 | | 157 | 0,81 | | X | |
| | 1,54 | 43 | 0,91 | 0,3 | 231 | 0,59 | 0,13 | √ | 4 |
| | 1,87 | 40 | 0,88 | | 140 | 0,95 | | X | |
| | 2,32 | 58 | 1,17 | 0,2 | 232 | 1,13 | 0,09 | X | |
| | 1,52 | 42 | 0,84 | | 155 | 0,68 | | √ | 3 |
| | 2,91 | 53 | 4,57 | 0,21 | 221 | 1,31 | 0,12 | X | |
| | 2,55 | 62 | 1,41 | | 231 | 1,1 | | √ | 4 |
| **Average** | 2,03 | 48,13 | 1,44 | 0,14 | 189 | 0,94 | 0,06 | 0 | 1,38 |

**Table 8: Experimental Set up V1 PEM1+Fol - Infected samples grown on soil treated with 15ml of Permeate (V1 PEM1+Fol)**

| **V1 PEM1+Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 2,08 | 40 | 1,65 | 0,3 | 90 | 0,39 | 0,1 | √ | 3 |
| | 3,78 | 59 | 2,52 | 0,19 | 151 | 1,24 | | X | |
| | 3,55 | 65 | 2,19 | 0,21 | 149 | 1,34 | 0,18 | X | |
| | 3,37 | 65 | 2,29 | 0,29 | 200 | 1,04 | | X | |
| | 2,92 | 73 | 2,08 | 0,23 | 295 | 0,82 | 0,17 | X | |
| | 2,87 | 78 | 1,63 | 0,25 | 205 | 1,19 | | X | |
| | 4,08 | 79 | 2,54 | 0,24 | 140 | 1,53 | 0,17 | X | |
| | 2,98 | 65 | 1,81 | 0,23 | 151 | 1,15 | | X | |
| **Average** | 3,20 | 65,5 | 2,09 | 0,24 | 172 | 1,09 | 0,08 | 0 | 0,375 |

**Table 9: Experimental Set up V1 PEM2+Fol - Infected samples grown on soil treated with 30 ml of Permeate (V1 PEM1+Fol)**

| **V1 PEM2+Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 6,71 | 78 | 4 | 0,47 | 222 | 2,64 | 0,25 | X | |
| | 7,41 | 115 | 4,91 | 0,45 | 170 | 2,45 | | X | |
| | 5,26 | 88 | 3,51 | 0,52 | 212 | 1,69 | 0,32 | X | |
| | 6,13 | 98 | 3,7 | 0,38 | 195 | 2,38 | | X | |
| | 5,5 | 86 | 3,45 | 1,1 | 209 | 2 | 0,16 | X | |
| | 7,05 | 108 | 4,3 | | 235 | 2,66 | 0,15 | X | |
| | 6,79 | 103 | 4,58 | 1,19 | 293 | 2,16 | 0,31 | X | |
| | 5,79 | 94 | 3,49 | | 199 | 2,27 | | X | |
| **Average** | 6,33 | 96 | 3,99 | 0,51 | 216 | 2,28 | 0,15 | 0 | 0 |

**Table 10: Experimental Set up V2 - Untreated soil control samples; infected with Fusarium oxisporum (V2Fol)**

| **V2 Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 2,85 | 51 | 1,34 | 0,12 | 175 | 1,49 | 0,08 | X | |
| | 1,99 | 60 | 0,95 | 0,05 | 383 | 1,02 | 0,03 | X | |
| | 2,09 | 65 | 0,98 | 0,07 | 190 | 1,09 | 0,05 | X | |
| | 1,38 | 30 | 0,64 | 0,01 | 120 | 0,73 | 0,03 | X | |
| | 1 | 40 | 0,53 | 0,12 | 136 | 0,46 | 0,09 | √ | 3 |
| | 2,38 | 63 | 1,13 | 0,09 | 176 | 1,25 | 0 | X | |
| | 1,29 | 50 | 0,68 | 0,12 | 141 | 0,58 | 0,07 | √ | 2 |
| | 0,03 | 0 | 0,02 | 0,17 | 34 | 0 | 0,08 | √ | 15 |
| **Average** | 1,63 | 45 | 0,78 | 0,09 | 169 | 0,83 | 0,05 | 0 | 2,5 |

**Table 11: Experimental Set up V2PEM1+Fol - Infected samples grown on soil treated with 15 ml of Permeate (V2 PEM1+Fol)**

| **V2 PEM1+Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 0,8 | 39 | 0,6 | 0,17 | 144 | 0,19 | 0,09 | √ | 3 |
| | 0,15 | 18 | 0,1 | 0,29 | 20 | 0,02 | 0,07 | √ | 4 |
| | 3,68 | 65 | 2,45 | 0,26 | 194 | 1,19 | 0,11 | √ | 2 |
| | 4,45 | 81 | 2,86 | 0,27 | 301 | 1,56 | 0,08 | √ | 2 |
| | 3,67 | 64 | 2,61 | 0,03 | 205 | 0,99 | 0 | √ | 3 |
| | 4,48 | 84 | 2,81 | 0,27 | 221 | 1,66 | 0,07 | √ | 2 |
| | 4,81 | 65 | 2,77 | 0,19 | 258 | 2,03 | 0,11 | X | 0 |
| | 4,17 | 76 | 2,79 | 0,01 | 172 | 1,37 | 0,01 | √ | 3 |
| **Average** | 3,28 | 62 | 2,12 | 0,19 | 189 | 1,13 | 0,07 | 0 | 2,38 |

**Table 12: Experimental Set up V2 PEM2+Fol - Infected samples grown on soil treated with 30 ml of Permeate (V2 PEM1+Fol)**

| **V2 PEM2+Fol** | | | | | | | | | |
|---|---|---|---|---|---|---|---|---|---|
| | **Plant Weight (g)** | **Shoot Lengths (cm)** | **Shoot weight (wet) (g)** | **Shoot weight (dry) (g)** | **Root Length (cm)** | **Root Weight (wet) (g)** | **Root Weight (dry) (g)** | **Infestation** | **infestation intensity** |
| | 7,09 | 85 | 4,43 | 0,85 | 186 | 2,59 | 0,15 | X | |
| | 5,65 | 80 | 3,51 | 0,46 | 203 | 2,1 | 0,22 | X | |
| | 3,47 | 55 | 2,51 | 0,55 | 166 | 0,91 | 0,22 | X | |
| | 8,3 | 109 | 4,97 | 0,16 | 270 | 3,27 | 0,05 | X | |
| | 7,77 | 91 | 4,62 | 0,64 | 160 | 3,11 | 0,11 | X | |
| | 7,19 | 96 | 4,35 | 0,39 | 360 | 2,78 | 0,3 | X | |
| | 10,02 | 121 | 6 | 0,42 | 185 | 4,02 | 0,11 | X | |
| | 5,61 | 90 | 3,7 | 0,34 | 193 | 1,88 | 0,13 | √ | 3 |
| **Average** | 6,89 | 91 | 4,26 | 0,48 | 215 | 2,58 | 0,16 | 0 | 0,38 |

Test results show a significant decrease in infection intensity in plants grown on a substrate treated with the adjuvant composition pursuant to the present invention. Infestation intensity decreased to 0 (equal to no plant showing infection systems) in the first set of samples (V1Fol) and 6.5-fold in the second set of samples (V2Fol) thus showing a significant impact of using the invention adjuvant in eliciting resistance of tomato plants against infections with *Fusarium oxisporum.*

### Effect of adjuvant composition on Fusarium oxisporum infestation

The variants of the first experimental series showed a low infection with Fusarium oxisporum. Thus of 24 plants treated with Fusarium oxisporum, only four plants were demonstrably infected with Fusarium oxisporum. In the second test series, a total of eleven plants were infected with Fol. But there were also only three out of eight plants demonstrably infected. Overall, it was found that the 'PEM1Fol' variants had the highest frequency of infestation but also the lowest infestation level. The 'PEM2Fol' variants had a total of 2 plants infected.

**Table 13: Infestation frequency and infestation intensity in the test variants**

| **Variant** | **Infestation frequency** | **Infestation intensity** |
|---|---|---|
| Fol | 37,5% | 35 |
| PEM1Fol | 50% | 19.38 |
| PEM2Fol | 12.5% | 25 |

### Results

From the fourth week on the pot test variants 'UK' and 'Fol' exhibited deficiency symptoms. The symptoms presumably occurred due to phosphorus deficiency. Due to this deficiency, these plants remained smaller and formed fewer leaves. The plants treated with the invention adjuvant composition showed a decrease in leaf formation during the no deficiency symptoms for the entire duration of the test.

The phenological development according to the BBCH scale showed that from the third week onwards, the plants treated with the invention adjuvant composition grew stronger than untreated plants. The other plants treated with Fusarium oxisporum were smaller in all variants except those treated with Fusarium oxisporum of the higher dose of adjuvant composition (30ml). A similar picture also showed the growth of the shoots. Starting from the third week the variants with adjuvant composition and without adjuvant composition split up. With variants treated with adjuvant composition increased shoot length in the following weeks stronger than the variants without adjuvant composition. In addition, it could be seen that the higher adjuvant composition dose promoted growth more strongly. But even with the low dose of adjuvant composition considerable differences to the variants without adjuvant composition were seen. One could therefore conclude that adjuvant composition surprisingly promoted the growth of plants and the vitality of the plant and thus had a positive effect. The shoot dry mass also confirmed this. The PEM2-Variants were almost twice as heavy as the PEM1 variants. The variants without adjuvant composition only weighed 25 % (m/m) of the PEM2 variants.

Basically, the experiments demonstrated that adjuvant composition of the present inventon is able to support the growth of plants significantly. Since adjuvant composition was applied over the soil and was in direct contact with the roots, the effect of adjuvant composition exerted via the soil and via the roots. As the amount of nutrients in the adjuvant composition is too little to exert a direct growth influence on plants it can be assumed that the adjuvant composition of the present invention surprisingly exerts a different influence on growth. In particular the root growth of tomatoes treated with adjuvant composition of the present invention were significantly harder. As is generally known, the roots provide nutrients and water for the shoot growth. If the shoot and root dry mass of the variant 'PEM2' are each described as 100 % (m/m) - i.e. the maximum possible growth - then the Variant 'PEM1' achieved 72 % (m/m) of the root mass, 61 % (m/m) of the shoot mass. The Variant 'UK' has reached with 39 % (m/m) of the root mass, 24 % (m/m) of the shoot mass less root and shoot mass compared to the 'PEM2' variants. In the case of the 'UK' variant, 15 % less root mass was transformed into shoot mass. So there is a 4 % difference in recycling of root mass in shoot mass between 'PEM1' and 'UK'. A strong effect of the invention adjuvant composition on plat growth and health could be demonstrated.

### Short description of the drawings

**Fig. 1** Calculation of infestation frequency
**Fig. 2** Calculation of infestation intensity

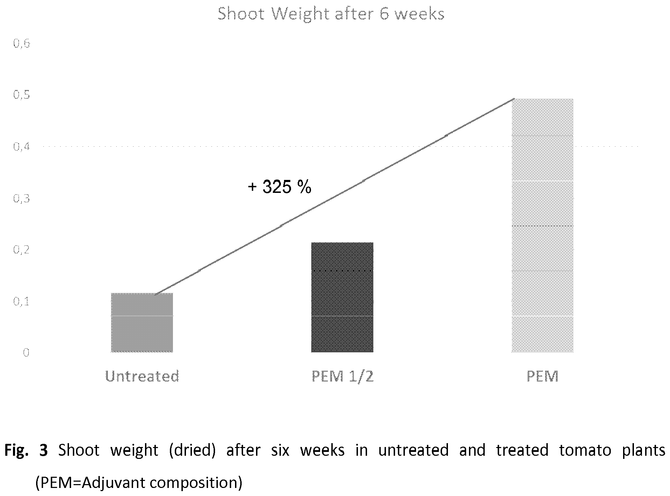

**Fig. 3** illustrates the test results for Tomatoes Shoot weight (dried) according to tables 1, 2, 3, 4, 5, and 6, and as described in connection with above example 1.

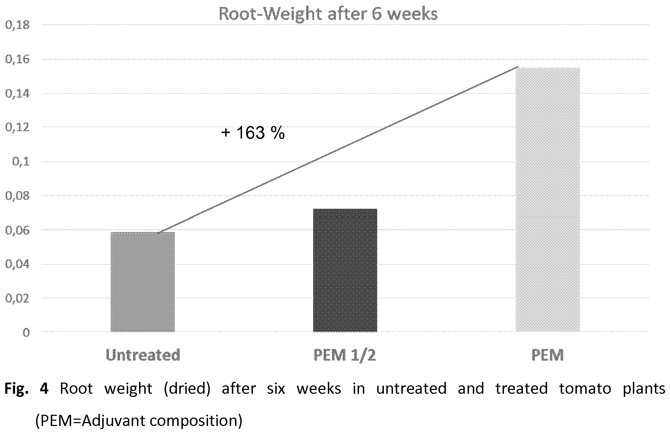

**Fig. 4** illustrates the test results for Tomatoes root weight (dried) according to tables 1, 2, 3, 4, 5, and 6, and as described in connection with above example 1

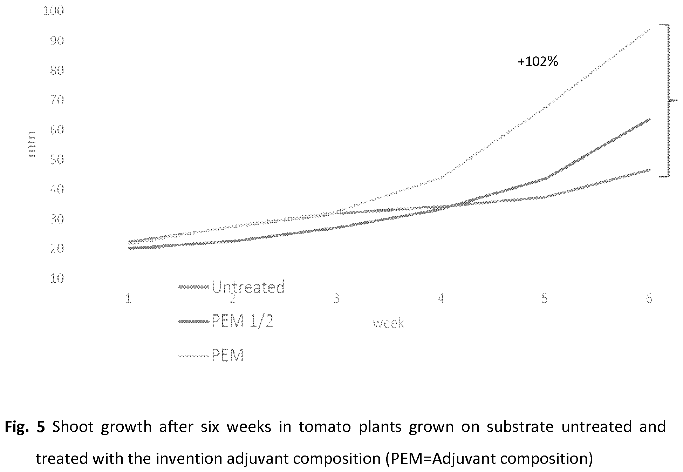

**Fig. 5** illustrates the test results for Tomatoes Shoot growth according to tables 1, 2, 3, 4, 5, and 6, and as described in connection with above example 1.
**Fig. 6** illustrates the differences in plant development following *Fusarium oxisporum* infection pursuant to the results displayed in tables 7 to 12 and as described in connection with above example 2.

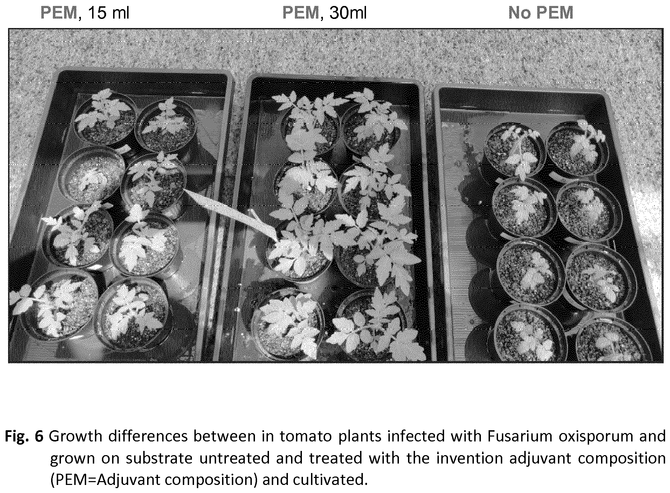

All plants shown in Fig.6 have the same age and were grown under the same conditions and infected with *Fusarium oxisporum*, with the exception that control group (No PEM) was grown on substrate not incubated with the invention adjuvant composition while sample groups 1 (PEM, 15ml) and 2 (PEM, 30ml) were grown on substrate incubated with different amounts of the invention adjuvant composition.

The subject invention contemplates the following items: An adjuvant composition consisting of or comprising at least one permeate obtained from waste water derived from the fungal borne production of pharmaceutically active or additive ingredients, in particular antibiotics or citric acid using at least one fungal species.

The aforesaid adjuvant composition, wherein the permeate comprises a mixture of at least one glycoprotein and at least one further protein or protein species having a molecular weight of between 5.5 kD and 7.5 kD, preferable 6.5 kD.

The aforesaid adjuvant composition, wherein the fungal species is selected from the group consisting of *Penicillium, Acremonium, Tolypocladium, Septoria, Beauveria, Sesquicilliopsis, Claviceps, Phoma, Fusarium, Gibberella, Clitopilus, Saccaromyces, Pichia,* and *Aspergillus* species or mixtures thereof, preferably of *Penicillium* species, in particular *Penicillium chrysogenum.*

The aforesaid adjuvant composition, wherein the protein concentration in the composition is between 0,05 and 0,30 g/l of permeate, preferably between 0,09 g/l and 0,21g/l of permeate.

The aforesaid adjuvant composition, wherein the composition is provided in liquid, gaseous or solid, preferably water-soluble state.

The aforesaid adjuvant composition for contacting plants, parts of plants, seeds, their locus of growth with an effective amount of the adjuvant composition.

The subject invention further comprises a method of producing the invention adjuvant composition comprising the steps of:
(i) preparing a nutrient solution and, optionally
   (ia) transferring the nutrient solution into a fermentation vessel and parallel or prior to transferal
   (ib) sterilizing the nutrient solution,
(ii) adding a suspension containing fungal spores, in particular spores obtained from cultures of fungal species selected from the group consisting of *Penicillium, Acremonium, Tolypocladium, Septoria, Beauveria, Sesquicilliopsis* , *Claviceps, Phoma, Fusarium, Gibberella, Clitopilus, Saccaromyces, Pichia, and Aspergillus* species or mixtures thereof, preferably of *Penicillium* species, in particular *Penicillium chrysogenum* to the nutrient solution,
(iii) growing the fungal species in the suspension to form a mycelium,
(iv) fermenting the suspension to obtain a pharmaceutically active or additive main product, in particular antibiotic, citric acid or other fermented products,
(v) separating the pharmaceutically active or additive main product from the suspension,
(vi) separating the mycelium from the suspension, preferably by decanting the suspension,
(vii) providing the mycelium-free suspension for use as an adjuvant.

The aforesaid method further comprising the step of:
(viii) sterilizing the suspension obtained from step (vii) by antibacterial treatment, preferably chemical treatment and/or filtration.

The aforesaid method, further comprising the step of:
(ix) adjusting the suspension pH to 4.0.

The aforesaid method, further comprising the step of:
(x) concentrating or drying the suspension.

The aforesaid method, further comprising the step of:
(xi) adjusting the suspension protein content to between 0,05 and 0,30 g/l, preferably to between 0,09 g/l and 0,21 g/l.

The aforesaid method, further comprising the step of:
(xii) mixing the suspension with at least one agrochemical, in particular wherein the agrochemical is selected from a pesticide, a growth regulator and a fertilizer.

The subject invention also contemplates a use of the aforesaid adjuvant and/or an adjuvant obtained from the aforementioned method in agriculture, in particular with the adjuvant being present in liquid, gaseous or solid, preferably water-soluble state.

The aforesaid use for enhancing plant growth, in particular root and shoot growth of agricultural crops.

The aforesaid use for eliciting resistance of agricultural crops against diseases, in particular against fungal diseases, preferably against infections with *Fusarium ssp.* in particular *F*. *oxisporum, Pythium ssp.* in particular *P. ultimum, Plasmopara ssp.* in particular *P. viticiola, Uncinula ssp.* in particular *U. necator, Venturia ssp.* in particular *V. inaequalis, Peronospora ssp.* in particular *P. destructor, Ganoderma boninese* and/or *Phytophtera ssp.* in particular *Phytophtera infestans.*

The aforesaid use for enhancing plant growth and/or for eliciting resistance by contacting the plants, parts of plants, seeds, their locus of growth or a plant growth media with an effective amount of the adjuvant composition.

The aforesaid use for enhancing the bio-efficacy or bio-availability of at least one agrochemical, said use comprising applying a mixture of the adjuvant and the agrochemical to plants, parts of plants, seeds, or at their locus of growth in any desired sequence, including simultaneously, separately, or in succession with at least one other agrochemically active substances, in an amount effective to enhance the bio-efficacy or bio-availability of said at least one agrochemical and/or the at least one other agrochemically active substances.

The aforesaid use, wherein the agrochemical is selected from a pesticide, a growth regulator and/or a fertilizer or mixtures thereof.

The invention further contemplates a plant growth media comprising an effective amount of the invention adjuvant composition and/or the adjuvant composition obtained in the aforementioned method.

The aforementioned plant growth media further comprising additives, fillers, pH adjusting agents and/or liquids, in particular water.

The aforementioned plant growth media further comprising a gelling agent.

The aforementioned plant growth media, further containing an effective amount of an agrochemical with the adjuvant composition enhancing the bio-efficacy or bio-availability of the at least one agrochemical.

The aforementioned plant growth media, with the media being present in solid, liquid or gaseous state.

The invention also contemplates a use of the aforesaid plant growth media, for enhancing plant growth, in particular root and shoot growth of agricultural crops and/or for eliciting resistance of agricultural crops against diseases by applying the plant growth media to plants, parts of plants, seeds, or at their locus of growth or by growing the plants in a media consisting of or comprising the plant growth media.

The invention also contemplates a growth substrate, in particular for in-vitro-culture of plants, consisting of or comprising the invention adjuvant composition and/or the aforesaid plant growth media.

The invention also contemplates the aforesaid use with the adjuvant being present as an additive in livestock breeding in particular in liquid, gaseous or solid, preferably water-soluble state.

The aforesaid use for enhancing livestock health and/or for eliciting resistance by contacting the livestock or a livestock feedstuff with an effective amount of the invention adjuvant composition and/or the adjuvant composition obtained in the invention method.

The aforesaid use for eliciting resistance of livestock against diseases, in particular inflammatory diseases, preferably bovine uterus infections.

## Claims

1. An adjuvant composition consisting of or comprising at least one permeate obtained from waste water derived from fungal borne production of at least one pharmaceutically active or additive ingredient in particular the production of antibiotics or citric acid using at least one microorganism, in particular a fungal species.

2. The adjuvant composition of claim 1, wherein the permeate comprises a mixture of at least one glycoprotein and at least one further protein or protein species having a molecular weight of between 5.0 kD and 8.0 kD, preferable 6.5 kD.

3. The adjuvant composition of claim 1 or 2, wherein the fungal species is selected from the group consisting of *Penicillium, Acremonium, Tolypocladium, Septoria, Beauveria, Sesquicilliopsis* , *Claviceps, Phoma, Fusarium, Gibberella, Clitopilus, Saccaromyces, Pichia,* and *Aspergillus* species or mixtures thereof, preferably of *Penicillium* species, in particular *Penicillium chrysogenum* and wherein the at least one pharmaceutically active or additive ingredient is preferably obtained by fermentation.

4. The adjuvant composition of any of claims 1 to 3, wherein the protein concentration in the composition is between 0,02 and 0,50 g/l of permeate, preferably between 0,09 g/l and 0,21g/l of permeate, wherein the composition is preferably provided in liquid, gaseous or solid, preferably water-soluble state.

5. The adjuvant composition of any of claims 1 to 4 for contacting plants, parts of plants, seeds, their locus of growth with an effective amount of an adjuvant composition according to any of claims 1 to 4.

6. Method of producing an adjuvant composition according to any of claims 1 to 5 comprising the steps of:
(i) preparing a nutrient solution and, optionally
(ia) transferring the nutrient solution into a fermentation vessel and parallel or prior to transferal and/or
(ib) sterilizing the nutrient solution,
(ii) adding a suspension containing fungal spores, in particular spores obtained from cultures of fungal species selected from the group consisting of *Penicillium, Acremonium, Tolypocladium, Septoria, Beauveria, Sesquicilliopsis* , *Claviceps, Phoma, Fusarium, Gibberella, Clitopilus, Saccaromyces, Pichia, and Aspergillus* species or mixtures thereof, preferably of *Penicillium* species, in particular *Penicillium chrysogenum* to the nutrient solution,
(iii) growing the fungal species in the suspension to form a mycelium,
(iv) fermenting the suspension to obtain a pharmaceutically active or additive main product, in particular antibiotic, citric acid or other fermented product,
(v) separating the main product from the suspension,
(vi) separating the mycelium from the suspension, preferably by decanting the suspension,
(vii) providing the mycelium-free suspension for use as an adjuvant,
with the method optionally comprising the further steps of
(viii) sterilizing the suspension obtained from step (vii) by antibacterial treatment, preferably chemical treatment and/or filtration, and/or
(ix) adjusting the suspension pH to 4.0 and/or,
(x) concentrating or drying the suspension and/or
(xi) adjusting the suspension protein content to between 0,02 and 0,50 g/l, preferably to between 0,09 g/l and 0,21 g/l and/or
(xii) mixing the suspension with at least one agrochemical, in particular wherein the agrochemical is selected from a pesticide, a growth regulator and a fertilizer.

7. Use of an adjuvant according to any of claims 1 to 5 and/or obtained from a method according to claim 6 in agriculture, in particular with the adjuvant being present in liquid, gaseous or solid, preferably water-soluble state, in particular with the adjuvant enhancing plant growth, in particular root and shoot growth of agricultural crops and/or with the adjuvant eliciting resistance of agricultural crops against diseases, in particular against fungal diseases, preferably against infections with *Fusarium ssp.* in particular F. *oxisporum, Pythium ssp.* in particular *P. ultimum, Plasmopara ssp.* in particular *P. viticiola, Uncinula ssp.* in particular *U. necator, Venturia ssp.* in particular *V. inaequalis, Peronospora ssp.* in particular *P. destructor, Ganoderma boninese* and/or *Phytophtera ssp.* in particular *Phytophtera infestans and*/*or* with the adjuvant preferably enhancing plant growth and/or eliciting resistance by contacting the plants, parts of plants, seeds, their locus of growth or a plant growth media with an effective amount of the adjuvant composition according to any of claims 1 to 5 and/or obtained in a method according to claim 6.

8. The use according to claim 7 for enhancing the bio-efficacy or bio-availability of at least one agrochemical, said use comprising applying a mixture of the adjuvant and the agrochemical to plants, parts of plants, seeds, or at their locus of growth in any desired sequence, including simultaneously, separately, or in succession with at least one other agrochemically active substances, in an amount effective to enhance the bio-efficacy or bio-availability of said at least one agrochemical and/or the at least one other agrochemically active substances, in particular wherein the agrochemical is selected from a pesticide, a growth regulator and/or a fertilizer or mixtures thereof.

9. A plant growth media comprising an effective amount of the adjuvant composition according to any of claims 1 to 5 and/or obtained in a method according to claim 6 wherein the adjuvant composition optionally further comprises additives, fillers, pH adjusting agents and/or liquids, in particular water and/or further comprises a gelling agent and/or further comprises an effective amount of an agrochemical, with the adjuvant composition enhancing the bio-efficacy or bio-availability of the at least one agrochemical.

10. The plant growth media according to claim 9, with the media being present in solid, liquid or gaseous state.

11. Use of the plant growth media according to claim 9 or 10, for enhancing plant growth, in particular root and shoot growth of agricultural crops and/or for eliciting resistance of agricultural crops against diseases by applying the plant growth media to plants, parts of plants, seeds, or at their locus of growth or by growing the plants in a media consisting of or comprising the plant growth media.

12. A growth substrate, in particular for in-vitro-culture of plants, consisting of or comprising the adjuvant composition of any of claims 1 to 5 or a plant growth media according to any of claims 9.

13. The use according to claim 12 with the adjuvant being present as an additive in livestock breeding in particular in liquid, gaseous or solid, preferably water-soluble state.

14. The use according to claim 13 for enhancing livestock health and/or for eliciting resistance by contacting the livestock or a livestock feedstuff with an effective amount of the adjuvant composition according to any of claims 1 to 5 and/or obtained in a method according to any of claims 6.

15. The use according to claim 13 or 14 for eliciting resistance of livestock against diseases, in particular inflammatory diseases, preferably bovine uterus infections.
